# EUROPEAN PATENT SPECIFICATION

(11) **EP 3 301 977 B1**
(45) Date of publication and mention of the grant of the patent: **04.12.2019**
(21) Application number: 16191709.1
(22) Date of filing: 30.09.2016
(51) Int. Cl.: H04W 48/10, H04W 48/00

(54) **METHOD AND DEVICE FOR DERIVING CELL INFORMATION**
VERFAHREN UND VORRICHTUNG ZUR ABLEITUNG VON ZELLENINFORMATIONEN
PROCEDE ET DISPOSITIF DE DERIVATION D'INFORMATIONS DE CELLULE

(43) Date of publication of application: 04.04.2018
(73) Proprietor: Intel IP Corporation, Santa Clara, CA 95054 (US)
(72) Inventor: MOUSTAFA, Ahmed, 82008 Unterhaching (DE); SALEH, Ahmed, 82008 Unterhaching (DE)
(74) Representative: Lambsdorff & Lange Patentanwälte Partnerschaft mbB

(56) References cited:
- EP-A1- 2 978 230
- WO-A1-2008/034408
- WO-A1-2016/054855
- US-A1- 2010 124 919
- ZTE CORPORATION: "Updated MIB Acquisition", 3GPP DRAFT; R2-124509_UPDATED MIB ACQUISITION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Bratislava, Slovakia; 20121008 - 20121012 29 September 2012 (2012-09-29), XP050666635, Retrieved from the Internet: URL:http://www.3gpp.org/ftp/tsg_ran/WG2_RL 2/TSGR2_79bis/Docs/ [retrieved on 2012-09-29]

## Description

### FIELD

The disclosure relates to a method and a device for deriving cell information of a radio cell by a mobile device by using system information transmitted by a sequence of radio frames. In particular, the disclosure relates to techniques for probabilistic decoding of system information of a mobile communication standard such as LTE (Long Term Evolution).

### BACKGROUND

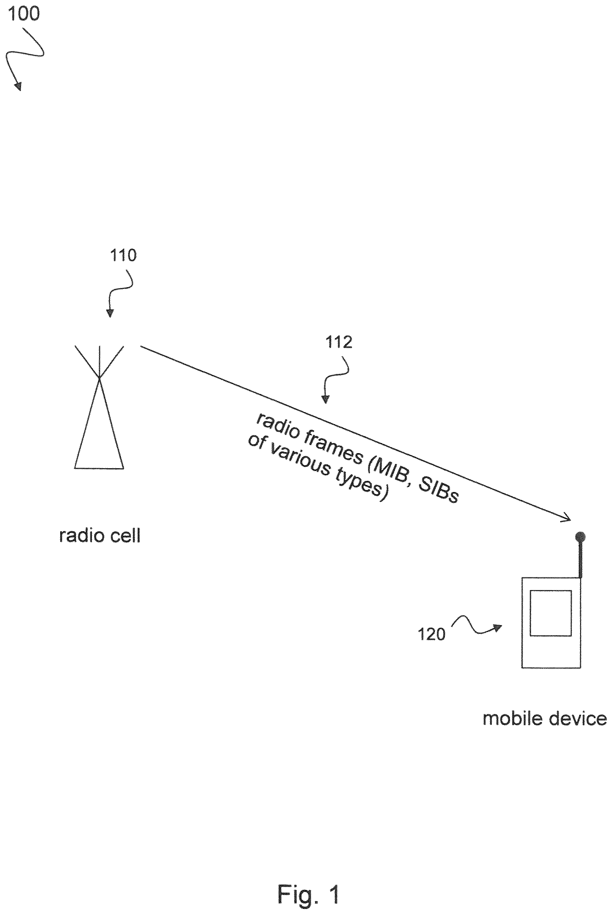

In a cell search procedure of a wireless communication system 100 as shown in Fig. 1, the mobile device 120 or mobile terminal or handheld receives a sequence of radio frames 112 from one or more radio cells 110, e.g. base stations. These radio frames 112 include synchronization information and other useful information required for the mobile device 120 to initiate a communication with a radio cell 110. Such information is included in a master information block (MIB) and in system information blocks (SIBs) of various types transmitted by the sequence of radio frames 112. In cell search procedures like PLMN (public land mobile network) search, etc. ofwireless communication standards such as LTE (Long Term Evolution), MIB and SIB1 are mandatory information to be acquired not to extend the search time. In cell camping procedures, MIB, SIB1 and SIB2 are the mandatory information.

WO 2016/054855 A1 describes deriving synchronization information by reading synchronization information block. Figure 7 illustrates a UE behavior of power on without cell ID and SFN. The UE has no information about the network and uses PSS/SSS or new mSYNC for initial course time and frequency synchronization and cell search to obtain Cell ID.

EP 2 978 230 A1 teaches a method to allocate a broadcast channel in a wireless access system. A newly defined broadcast channel is presented in order to reduce a used resource region and transmitting a broadcast channel signal which is capable of reducing overhead upon transmitting the broadcast channel signal.

US 2010/124919 A1 describes a method for receiving system information in mobile communication terminal. Solutions are provided for the scenario where the terminal cannot obtain SIB due to system information changes.

### SUMMARY OF THE INVENTION

Radio communication technologies such as GSM, UMTS, LTE, WiFi, 2G, 3G, 4G, 5G and others will further increase traffic density. Hence, it is an object of the disclosure to improve the communication by reducing the search times of mobile devices to find adequate radio cells. This object is achieved by the features of the independent claims.

### BRIEF DESCRIPTION OF THE DRAWINGS

The accompanying drawings are included to provide a further understanding of embodiments and are incorporated in and constitute a part of this specification. The drawings illustrate embodiments and together with the description serve to explain principles of embodiments. Other embodiments and many of the intended advantages of embodiments will be readily appreciated as they become better understood by reference to the following detailed description.
Fig. 1 is a schematic diagram illustrating a wireless communication system 100.
Fig. 2 is a block diagram illustrating a method 200 for deriving cell information according to the disclosure.
Fig. 3 is a schematic diagram 300 illustrating transmission of master information block (MIB) and system information blocks (SIBs) in radio sub-frames.
Fig. 4 is a schematic diagram 400 illustrating acquisition of MIB and SIB information by a mobile device according to the disclosure.
Fig. 5 illustrates a block diagram of mobile device 500 according to the disclosure.

### DETAILED DESCRIPTION

In the following detailed description, reference is made to the accompanying drawings, which form a part thereof, and in which is shown by way of illustration specific aspects in which the invention may be practiced. It is understood that other aspects may be utilized and structural or logical changes may be made without departing from the scope of the present invention. The following detailed description, therefore, is not to be taken in a limiting sense, and the scope of the present invention is defined by the appended claims.

The following terms, abbreviations and notations will be used herein:
MIB: Master Information Block
SIB: System Information Block
SFN: System Frame Number
PLMN: Public Land Mobile Network
SI: System Information
TTI: Transmission Time Interval
RV: Redundancy Version
RF: Radio Frequency
LTE: Long Term Evolution
UE: User Equipment, mobile device, mobile terminal
OFDM: Orthogonal Frequency Division Multiplex eNB,
eNodeB: Base station, radio cell
MIMO: Multiple Input Multiple Output

The methods and devices described herein may be used for deriving cell information in cell search procedures of mobile devices, user equipments (UE) or mobile terminals. It is understood that comments made in connection with a described method may also hold true for a corresponding device configured to perform the method and vice versa. For example, if a specific method step is described, a corresponding device may include a unit to perform the described method step, even if such a unit is not explicitly described or illustrated in the figures. Further, it is understood that the features of the various exemplary aspects described herein may be combined with each other, unless specifically noted otherwise.

The methods and devices described herein may be implemented in wireless communication networks, in particular communication networks based on mobile communication standards such as LTE, in particular LTE-A and/or OFDM and successor standards such as 5G. The methods are also applicable for connectivity standards, in particular high speed standards from the 802.11 family e.g. 802.11ad and successor standards. The methods and devices described below may be implemented in electronic devices such as mobile devices (or mobile stations or User Equipments (UE)), in particular in radio receivers of such mobile devices. The described devices may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

The methods and devices described herein may be configured to transmit and/or receive radio signals and performing associated signal processing. Radio signals may be or may include radio frequency signals radiated by a radio transmitting device (or radio transmitter or sender) with a radio frequency lying in a range of about 3 kHz to 300 GHz. The frequency range may correspond to frequencies of alternating current electrical signals used to produce and detect radio waves.

The methods and devices described herein after may be designed in accordance to mobile communication standards such as e.g. the Long Term Evolution (LTE) standard or the advanced version LTE-A thereof. LTE (Long Term Evolution), marketed as 4G LTE and future 5G LTE, is a standard for wireless communication of high-speed data for mobile phones and data terminals.

The methods and devices described herein may be configured to receive radio frames including master information blocks (MIBs) and system information blocks (SIBs), e.g. according to a mobile communication standard such as LTE, for example according to 3GPP technical specification TS 36.331, in particular according to section 5.2.3. The system information is very essential and the same is broadcasted by LTE eNB over logical channel BCCH. This logical channel information is further carried over transport channel BCH or carried by DL-SCH. There are two parts in SI (system information): static part and dynamic part. Static part is called as MIB and is transmitted using BCH and carried by PBCH once every 40ms. MIB carries useful information which includes channel bandwidth, PHICH configuration details; transmit power, no. of antennas and SIB scheduling information transmitted along with other information on the DL-SCH. Dynamic part is called as SIB and is mapped on RRC SI messages (SI-1,2,3,4,5,6,7,8,9,10,11) over DL-SCH and transmitted using PDSCH at periodic intervals. SI-1 is transmitted every 80ms, SI-2 and SI-3 have no fixed schedule, they are scheduled based on information in SI-1. System Information Blocks are grouped in SI containers. Each SI is composed of multiple SIBs. Each SI usually will have different transmission frequency and will be sent in a single sub-frame. SIBs are transmitted using BCCH mapped on DL-SCH which in turn mapped on PDSCH.

The methods and devices described hereinafter may be applied in OFDM systems. OFDM is a scheme for encoding digital data on multiple carrier frequencies. A large number of closely spaced orthogonal sub-carrier signals may be used to carry data. Due to the orthogonality of the sub-carriers crosstalk between sub-carriers may be suppressed.

The methods and devices described hereinafter may be applied in MIMO systems and diversity receivers. Multiple-input multiple-output (MIMO) wireless communication systems employ multiple antennas at the transmitter and/or at the receiver to increase system capacity and to achieve better quality of service. In spatial multiplexing mode, MIMO systems may reach higher peak data rates without increasing the bandwidth of the system by transmitting multiple data streams in parallel in the same frequency band. A diversity receiver uses two or more antennas to improve the quality and reliability of a wireless link.

In the following, embodiments are described with reference to the drawings, wherein like reference numerals are generally utilized to refer to like elements throughout. In the following description, for purposes of explanation, numerous specific details are set forth in order to provide a thorough understanding of one or more aspects of embodiments. However, it may be evident to a person skilled in the art that one or more aspects of the embodiments may be practiced with a lesser degree of these specific details. The following description is therefore not to be taken in a limiting sense.

The various aspects summarized may be embodied in various forms. The following description shows by way of illustration various combinations and configurations in which the aspects may be practiced. It is understood that the described aspects and/or embodiments are merely examples, and that other aspects and/or embodiments may be utilized and structural and functional modifications may be made without departing from the scope of the present disclosure.

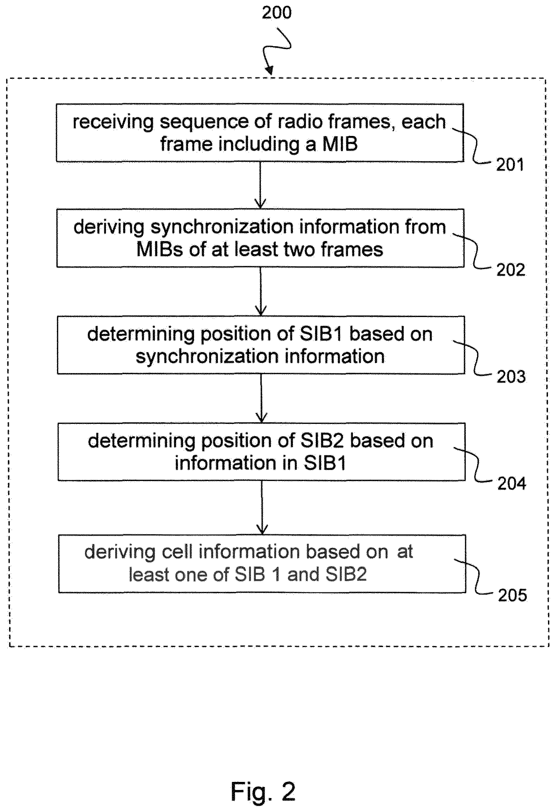

Fig. 2 is a block diagram illustrating a method 200 for deriving cell information of a radio cell by a mobile device according to the disclosure. The method 200 includes receiving 201 a sequence of radio frames, wherein each radio frame comprises a master information block (MIB). The method 200 includes deriving 202 synchronization information of the sequence of radio frames from the MIBs of at least two radio frames. The method 200 includes determining 203 a position of a first type system information block (SIB1) comprised in the sequence of radio frames based on the synchronization information. The method 200 includes determining 204 a position of a second type system information block (SIB2) comprised in the sequence of radio frames based on information comprised in the SIB1. The method 200 includes deriving 205 the cell information based on at least one of the SIB1 and the SIB2. In cell search procedures like PLMN (public land mobile network) search, etc., the method 200 may acquire MIB and SIB1, while in cell camping procedures, the method 200 may acquire MIB, SIB1 and SIB2.

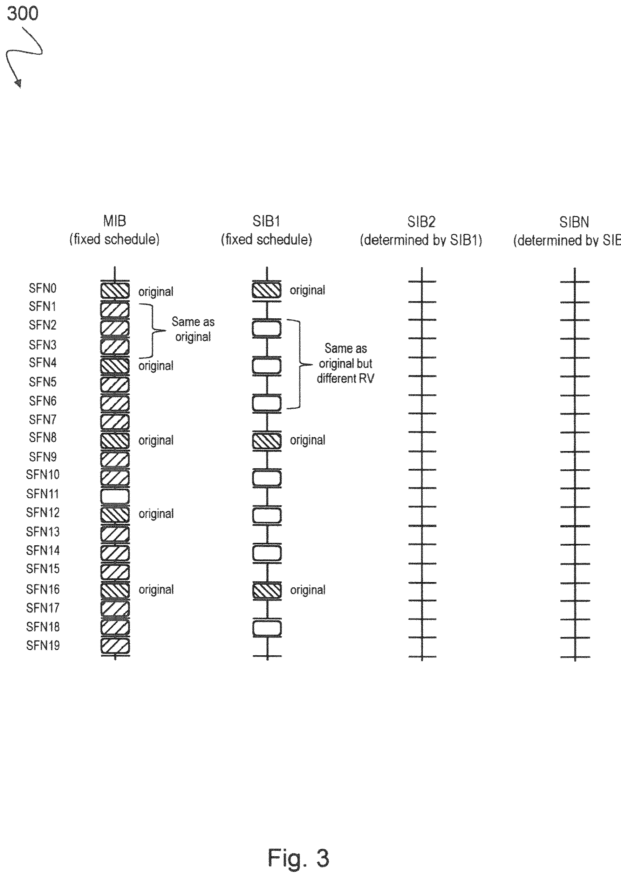

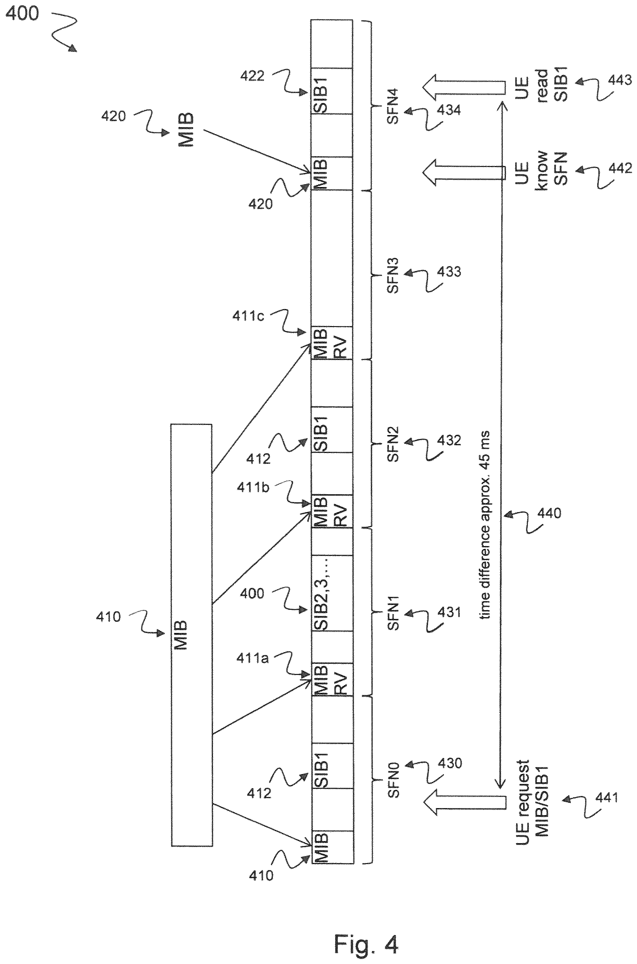

In one implementation example of the method 200, deriving 202 the synchronization information may be based on system frame numbers (SFNs) of the sequence of radio frames, e.g. SFNs as described below with respect to Figs. 3 and 4.

In one implementation example of the method 200, each MIB comprises an SFN field recording only a most significant bits (MSB) portion of a respective SFN, e.g. SFNs as described below with respect to Figs. 3 and 4.

In one implementation example of the method 200, deriving 202 the synchronization information may be based on change in the SFN field of the MIB, e.g. as described below with respect to Figs. 3 and 4.

In one implementation example the method 200 further includes: storing the sequence of radio frames until detecting the change in the SFN field of the MIB; and determining 203 the position of the SIB1 based on the stored radio frames.

In one implementation example of the method 200 a least significant bits (LSB) portion of a respective SFN indicates a redundancy version of the MIB, e.g. as described below with respect to Figs. 3 and 4.

In one implementation example of the method 200, determining the SFNs may be based on receiving at most four successive radio frames, e.g. as described below with respect to Figs. 3 and 4.

In one implementation example the method 200 may further include: decoding the SIB1 to obtain the position of the SIB2; and decoding the SIB2 to obtain the cell information.

In one implementation example the method 200 may further include: using the cell information to exclude a number of search frequencies from a radio cell search procedure or to direct the mobile device to the radio cell, e.g. as described below with respect to Figs. 3 and 4.

In one implementation example the method 200 may further include: using determining a position of further type system information blocks (SIB3, SIB4, SIB5, SIB6, SIB7, SIB8) comprised in the sequence of radio frames based on the information comprised in the SIB1; and deriving further cell information based on the further type system information blocks, e.g. as described below with respect to Figs. 3 and 4.

In one implementation example of the method 200, the SIB1 may be arranged in the sequence of radio frames according to a fixed schedule; and/or the SIB2 may be arranged in the sequence of radio frames according to a schedule determined by the SIB1, e.g. as described below with respect to Figs. 3 and 4.

Fig. 3 is a schematic diagram 300 illustrating an exemplary transmission of master information block (MIB) and system information blocks (SIBs) in radio sub-frames.

In LTE the MIB or Master Information Block is information that is broadcasted by the eNodeB irrespective of any users presence. The MIB is first among the other system information blocks or SIB, which are also broadcasted by the eNodeB. The MIB is transmitted using a physical layer channel called PBCH or Physical Broadcast Channel on downlink. The MIB is a 24 bit information with following information within: 3 bits for system bandwidth, 3 bits for PHICH information, 8 bits for system frame number (SFN) and 10 bits are reserved for future use. The system bandwidth is knowledge a UE must have to decode any other physical layer channels. The PHICH info is used to decode the control channels. The system frame number SFN is transmitted in the MIB for initial synchronization and for periodic sync. The generation periodicity is the duration between two consecutive MIBs generated by the higher layers. This periodicity is 40 milliseconds and the physical layer receives a new MIB for encoding every 40 milliseconds. The system frame number SFN within each MIB will be a rolling number between 0-255, for example and keeps changing every four MIBs. The transmission periodicity is the duration between two consecutive PBCH transmissions by the physical layer. The physical layer transmits the PBCH for every 10 milliseconds.

The contents within 4 consecutive PBCH will remain the same as the PBCH carries MIB and the MIB can change only after 40 milliseconds since the first PBCH transmission. However, as can be seen from Fig. 3, the MIB is transmitted within each of the 4 consecutive PBCHs in a different redundancy version (RV): First as original MIB, second as MIB in a first redundancy version (RV1), third as MIB in a second redundancy version (RV2) and third as MIB in a third redundancy version (RV3).

As can be further seen from Fig. 3, the SIB1 is transmitted within each sequence of eight consecutive PBCHs in a different redundancy version (RV): First as original SIB1, second as SIB1 in a first redundancy version (RV1), third as SIB1 in a second redundancy version (RV2) and third as SIB1 in a third redundancy version (RV3). Transmission schedule of the other SIB types (SIB2, 3, 4, 5,...,N) is determined by SIB1.

The MIB uses a fixed schedule with a periodicity of 40 ms and repetitions made within 40 ms. The first transmission of the MIB is scheduled in subframe #0 of radio frames for which the SFN mod 4 = 0, and repetitions are scheduled in subframe #0 of all other radio frames.

The SFN (System Frame Number) which is present in MIB, helps with synchronization and acts as a timing reference. Note that the SFN field in the MIB records only the most significant 8 bits of the actual SFN; the remaining 2 bits are determined by which of the 4 repetitions the UE is looking at (00 for the first copy, 01 for the second, and so on.)

The SystemInformationBlockType1 uses a fixed schedule with a periodicity of 80 ms and repetitions made within 80 ms. The first transmission of SystemInformationBlockType1 is scheduled in subframe #5 of radio frames for which the SFN mod 8 = 0, and repetitions are scheduled in subframe #5 of all other radio frames for which SFN mod 2 = 0. All other SI messages are being transmitted at the cycles specified by SIB scheduling information elements in SIB1.

In LTE the sub-frame for a specific SIB transmission is determined by an algorithm as defined in 3GPP TS 36.331, section 5.2.3, e.g. of version 10.7.0 (Release 10).

According to the 3GPP, UE can acquire any dynamic scheduled system information blocks "SIB"s (SIB2, SIB3, SIB4 ...) after extracting the scheduling information for all other SIBs which is being transmitted as part of SIB1 in schedulingInfoList. This means UE needs to successfully decode SIB1 first then acquire the other SIBs based on their scheduling profile.

While UE try to acquire master information block "MIB" and system information block type 1 "SIB1", there will be a probability that some system information blocks are scheduled in sub-frames between MIB and SIB1 sub-frames. UE shall cache the sub-frames between SIB1 and MIB and after successful decoding of SIB1 information which has the scheduling parameters of other SIBs (e.g. SIB2, SIB3, SIB4 ...), the UE can fetch those SIBs from the cached sub-frames to check if they have any dynamical scheduled system information blocks.

The transmission described above provides the following advantages: Reduction of search time by excluding more frequencies (see first scenario described below with respect to Fig. 4); Faster camping since the UE will be directed to a cell rather than searching (see second and third scenarios described below with respect to Fig. 4); Reduction of power consumption since less frequencies need to be searched.

Fig. 4 is a schematic diagram 400 illustrating acquisition of MIB and SIB information by a mobile device according to the disclosure.

MIB 410 is a very crucial information that a UE needs to acquire before it can start any transaction with the eNodeB. All the vital information for the UE is in the MIB 410 and the UE may also derive the 40 millisecond boundary from the decoded MIB. The System frame number SFN transmitted within the PBCH will remain same for 4 radio frames (in Figure 4 as an example for the radio frames 430, 431, 432 and 433), because 4 consecutive radio frames 430, 431, 432, 433 are transmitted with the same MIB information 410. The first radio frame 430 has the original MIB information 410 while the second, third and fourth radio frames 431, 432, 433 have redundant versions (RV) 411a, 411b, 411c of the MIB information 410. Now for a UE to know the 40 millisecond boundary, all it has to find is 4 consecutive system frame numbers, e.g. SFN0, SFN1, SFN2 and SFN3 that are same. The corresponding radio frames (RF) 430, 431, 432 and 433 will have same system frame number within.

In a first case, if the UE starts decoding the MIB 410 from radio frame (RF) with subframe number 0, RF-0, 430 it will see same system frame number for 4 consecutive radio frames and it will understand that RF-0 is the 40 millisecond boundary. In a second case, if UE decodes RF-1 first then it will see same system frame numbers in RF-1, RF-2, RF-3 and a different one in RF-4 so it continues decoding the PBCH till RF-5, RF-6 & RF-7 and it sees a same system frame number from RF-4 to RF-7 and hence decides that RF-4 is the 40 millisecond boundary.
From system point of view, a UE can decode the MIB & 40 millisecond boundary in 40 milliseconds for the first case and 70 milliseconds for the second case, considering the latency start count from the time RF-0 was transmitted.

In the following the acquisition procedure of system information (SI) message is described. When acquiring an SI message, the UE determines the start of the SI-window for the concerned SI message as follows: for the concerned SI message, the number n is determined which corresponds to the order of entry in the list of SI messages configured by schedulingInfoList in SystemInformationBlockType1; the integer value x = (n - 1)*w is determined, where w is the si-WindowLength. The SI-window starts at the subframe #a, where a = x mod 10, in the radio frame for which SFN mod T = FLOOR(x/10), where T is the si-periodicity of the concerned SI message. Note that in E-UTRAN an SI-window of 1 ms is configured only if all SIs are scheduled before subframe #5 in radio frames for which SFN mod 2 = 0.

In Fig. 4, the UE requests 441 to acquire the MIB and SIB1 of a cell so it can synchronize on it and check the suitability criteria. In the example of Fig. 4, the request 441 was sent after the first MIB 410 was transmitted so it has to acquire 4 successive MIB 411a, 411b, 411c, 420 to know the SFN. After that UE can know where the SIB1 (SFN mod 2=0) 412 is transmitted. After successful decoding of the SIB1 412, UE knows the periodicity of the others SIBs 413 from the scheduling information. If UE saved the sub-frames between the first MIB 410 until the successful SIB1 decoding, it can fetch if any SIB 413 was scheduled in between and decode it afterwards.

There exist many cases that evaluating a cell ends after SIB1 reading. This means the UE didn't have the opportunity to decode the other SIBs (SIB2, SIB3,...) and gets benefit from them. In the following different exemplary scenarios are described.

For the scenarios described above, if the cached SIB was:
- SIB2: The UE can know the uplink frequency of the decoded cell and can excluded its UL frequency while doing band scans.
- SIB5: The UE can excluded the neighbor LTE frequencies while doing band scan or directly select one of them if the decoded cell was not suitable.
- SIB6: The UE can excluded the neighbor UMTS frequencies while doing band scan or directly select one of them if the decoded cell was not suitable.
- SIB7: The UE can excluded the neighbor GSM frequencies while doing band scan or directly select one of them if the decoded cell was not suitable.
- SIB8: The UE can excluded the neighbor CDMA2000 frequencies while doing band scan or directly select one of them if the decoded cell was not suitable.
The UE can get different benefits of other SIBs if needed.

In the following, an exemplary configuration is described: Using the above information with the following configurations: eNB can transmit 3 different type of SIBs in between SIB1 and its repletion (within 20 msec), SIB1 is received by UE with the information depicted in Table 1.

**Table 1: exemplary information in SIB1**

| | | |
|---|---|---|
| schedulingInfoList [0] | | SchedulingInfo |
| | si_Periodicity | SchedulingInfosi_Periodicity_rf8 |
| | sib_Mapping Info [0] | SIB_TypeSIB_Type_sibType2 |
| schedulingInfoList [1] | | SchedulingInfo |
| | si_Periodicity | SchedulingInfosi_Periodicity_rf8 |
| | sib_Mapping Info [0] | SIB_TypeSIB_Type_sibType3 |
| schedulingInfoList [2] | | SchedulingInfo |
| | si_Periodicity | SchedulingInfosi_Periodicity_rf8 |
| | sib_Mapping Info [0] | SIB_TypeSIB_Type_sibType4 |
| schedulingInfoList [3] | | SchedulingInfo |
| | si_Periodicity | SchedulingInfosi_Periodicity_rf8 |
| | sib_Mapping Info [0] | SIB_TypeSIB_Type_sibType5 |
| schedulingInfoList [4] | | SchedulingInfo |
| | si_Periodicity | SchedulingInfosi_Periodicity_rf8 |
| | sib_Mapping Info [0] | SIB_TypeSIB_Type_sibType6 |
| schedulingInfoList [5] | | SchedulingInfo |
| | si_Periodicity | SchedulingInfosi_Periodicity_rf8 |
| | sib_Mapping Info [0] | SIB_TypeSIB_Type_sibType7 |
| si_WindowLength | | ms5 |

Table 2 shows all the transmitted SIBs by the eNB for time frame of 30 ms using the configuration of Table 1:

**Table 2: transmitted SIBs for time frame of 30 ms when using the configuration of Table 1**

| SFN,TTI | System Info |
|---|---|
| 0,0 | MIB |
| 0,1 | SIB2 |
| 0,2 | SIB2 |
| 0,3 | SIB2 |
| 0,4 | SIB2 |
| 0,5 | SIB1 |
| 0,6 | SIB3 |
| 0,7 | SIB3 |
| 0, 8 | SIB3 |
| 0,9 | SIB3 |
| 1,0 | MIB RV |
| 1,1 | SIB4 |
| 1,2 | SIB4 |
| 1,3 | SIB4 |
| 1,4 | SIB4 |
| 1,5 | SIB5 |
| 1,6 | SIB5 |
| 1,7 | SIB5 |
| 1,8 | SIB5 |
| 1,9 | SIB5 |
| 2,0 | MIB RV |
| 2,1 | SIB6 |
| 2,2 | SIB6 |
| 2,3 | SIB6 |
| 2,4 | SIB6 |
| 2,5 | SIB1 RV |
| 2,6 | SIB7 |
| 2,7 | SIB7 |
| 2,8 | SIB7 |
| 2,9 | SIB7 |
| 3,0 | MIB RV |

This means if UE caches all the subframes received from the eNB in between SFN, TTI 0,0 (first occasion for MIB) till the SFN, TTI 4,0 (last MIB) UE will acquire SIB2,3,4,5,6,7 in between and no need to re acquire them after successfully decoding SIB1.

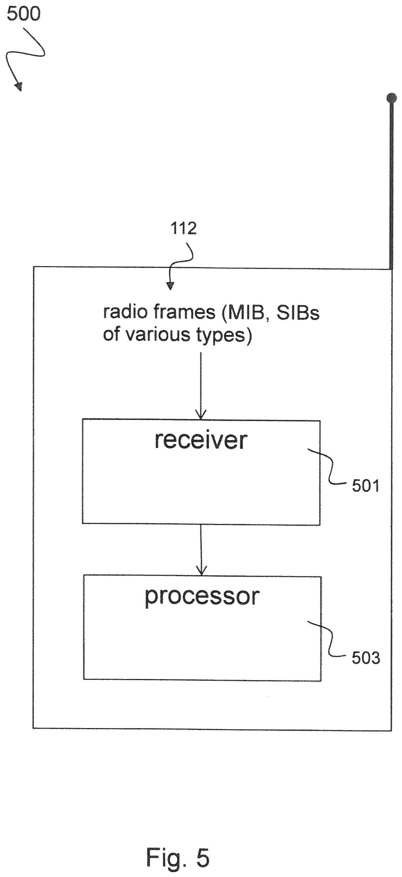

Fig. 5 illustrates a block diagram of mobile device 500 according to the disclosure.

The mobile device 500 includes a receiver 501 and a processor 503. The receiver 501 is configured to receive a sequence of radio frames 112, e.g. as described above with respect to Fig. 1, wherein each radio frame comprises a master information block (MIB), e.g. as described above with respect to Figures 3 and 4.

The processor 503 is configured to: derive synchronization information of the sequence of radio frames from the MIBs of at least two radio frames; determine a position of a first type system information block (SIB1) comprised in the sequence of radio frames based on the synchronization information; determine a position of a second type system information block (SIB2) comprised in the sequence of radio frames based on information comprised in the SIB1; and derive cell information based on at least one of the SIB1 and the SIB2, e.g. according to the blocks 201, 202, 203, 204 and 205 as described above with respect to the method 200 of Fig. 2. In cell search procedures like PLMN (public land mobile network) search, etc., the processor 503 may acquire MIB and SIB1, while in cell camping procedures, the processor 503 may acquire MIB, SIB1 and SIB2.

The processor 503 may initiate a cell search procedure for a radio cell based on using the derived cell information, i.e. MIB and SIB1. The processor 503 may initiate a cell camping procedure based on using the derived cell information, i.e. MIB, SIB1 and SIB2. The processor 503 may be configured to derive the synchronization information based on system frame numbers (SFNs) of the sequence of radio frames.

The UE may already accumulate frames for frequency scan, cell scan and SIBs acquisition. In one implementation the UE may depend on accumulated frames recursively and avoid new frames accumulations. For example, the UE can use the accumulated frames of cell scan to fetch broadcasted SIBs. In another implementation, the UE may save system information of cells that was decoded before. When the UE is performing cell search on a certain frequency and it can decode SIB1 successfully and the value "systemInfoValueTag" in SIB1 didn't change, the UE can use the pre-saved system information to avoid decoding of other SIBs. The UE can use SIBs information to optimize the UE's performance (for example by using the frequencies in SIB5, SIB6,... and SIB8 to exclude more frequencies or directly camp on them depending of the target of the procedure). When the UE is performing cell search and it didn't/couldn't decode SIB1, it can use the pre-saved system information in SIB1 that is related to the scheduling parameters to decode the other SIBs. If it can decode the other SIBs, it may use them to optimize the UE's performance. If other SIBs decoding failed, UE can proceed without using the other SIBs information.

There are certain subcarriers that are transmitted in the frame and can be skipped to reduce the memory requirement. These subcarriers are not involved in calculations below: Primary and secondary synchronization sequences; and Control Channels (MIB, ..). Further improvements can be done to reduce the memory needed. The following calculations can apply:

Number of OFDM symbols in a resource block can be 6 or 7 depending on the cyclic prefix configuration. For worst case calculations normal cyclic prefix (7) was selected.

Number of subcarriers in resource block = Num of OFDM symbols * Num of resource elements = 12 * 7 = 84 (in case of Normal cyclic prefix);
subcarriers in slot = Num of subcarriers in resource block
* Num of resource blocks;
subcarriers per subframe = Num slots in subframe * Num subcarriers in slot = 2 * Num subcarriers in slot; subcarriers per frame = subcarriers per subframe * 10.
The subcarrier consists of real and imaginary part and each part should be of size two bytes.
size of a frame in bytes = subcarriers per frame * size of variable * number of variables = subcarriers per frame * 2 * 2.

In an exemplary UE, the memory can have a size of approximately 900 Kbyte.

In one implementation the disclosed method can be limited to certain bandwidths. In another implementation a less number of frames can be cached than 4 frames.

The devices and systems described in this disclosure may be implemented as Digital Signal Processors (DSP), microcontrollers or any other side-processor or hardware circuit on a chip or an application specific integrated circuit (ASIC).

Embodiments described in this disclosure can be implemented in digital electronic circuitry, or in computer hardware, firmware, software, or in combinations thereof, e.g. in available hardware of mobile devices or in new hardware dedicated for processing the methods described herein.

The present disclosure also supports a computer program product including computer executable code or computer executable instructions that, when executed, causes at least one computer to execute the performing and computing blocks described herein, in particular the methods described above with respect to Figs. 2 to 4. Such a computer program product may include a readable storage medium storing program code thereon for use by a processor, the program code comprising instructions for performing the methods as described above.

## Claims

1. A method (200) for deriving cell information of a radio cell by a mobile device, the method comprising:
receiving (201) a sequence of radio frames, wherein each radio frame comprises a master information block MIB;
deriving (202) synchronization information of the sequence of radio frames from the MIBs of at least two radio frames;
determining (203) a position of a first type system information block SIB1 comprised in the sequence of radio frames based on the synchronization information;
determining (204) a position of a second type system information block SIB2 comprised in the sequence of radio frames based on information comprised in the SIB1; and
deriving (205) the cell information based on at least one of the SIB1 and the SIB2;
wherein receiving (201) the sequence of radio frames comprises caching the sub-frames between the MIB and the SIB1;
**characterized by**
after successful decoding of SIB1 information which provides scheduling parameters of other system information blocks than SIB1, fetching the other system information blocks from the cached sub-frames to check if they have any dynamical scheduled system information blocks.

2. The method (200) of claim 1, comprising:
deriving the synchronization information based on sequence frame numbers SFNs of the sequence of radio frames.

3. The method (200) of claim 2,
wherein each MIB comprises an SFN field recording only a most significant bits MSB portion of a respective SFN.

4. The method (200) of claim 3, comprising:
deriving the synchronization information based on a change in the SFN field of the MIB.

5. The method (200) of claim 4, comprising:
storing the sequence of radio frames until detecting the change in the SFN field of the MIB; and
determining the position of the SIB1 based on the stored radio frames.

6. The method (200) of one of claims 2 to 5,
wherein a least significant bits LSB portion of a respective SFN indicates a redundancy version of the MIB.

7. The method (200) of one of claims 2 to 6,
determining the SFNs based on receiving at most four successive radio frames.

8. The method (200) of one of the preceding claims, comprising:
decoding the SIB1 to obtain the position of the SIB2; and
decoding the SIB2 to obtain the cell information.

9. The method (200) of one of the preceding claims, comprising:
using the cell information to exclude a number of search frequencies from a radio cell search procedure or to direct the mobile device to the radio cell.

10. The method (200) of one of the preceding claims, comprising:
determining a position of further type system information blocks SIB3, SIB4, SIB5, SIB6, SIB7, SIB8 comprised in the sequence of radio frames based on the information comprised in the SIB1; and
deriving further cell information based on the further type system information blocks.

11. The method (200) of one of the preceding claims,
wherein the SIB1 is arranged in the sequence of radio frames according to a fixed schedule; and
wherein the SIB2 is arranged in the sequence of radio frames according to a schedule determined by the SIB1.

12. A computer readable non-transitory medium on which computer instructions are stored which when executed by a computer cause the computer to perform the method of any one of claims 1 to 11.

13. A mobile device (500), comprising:
a receiver (501), configured to receive a sequence of radio frames, wherein each radio frame comprises a master information block MIB; and
a processor (503), configured to:
derive synchronization information of the sequence of radio frames from the MIBs of at least two radio frames;
determine a position of a first type system information block SIB1 comprised in the sequence of radio frames based on the synchronization information;
determine a position of a second type system information block SIB2 comprised in the sequence of radio frames based on information comprised in the SIB1; and
derive cell information based on at least one of the SIB1 and the SIB2;
wherein receiving the sequence of radio frames comprises caching the sub-frames between the MIB and the SIB1;
**characterized by**
the processor (503) being further configured after successful decoding of SIB1 information, which provides scheduling parameters of other system information blocks than SIB1, to fetch the other system information blocks from the cached sub-frames to check if they have any dynamical scheduled system information blocks.

14. The mobile device (500) of claim 13,
wherein the processor (503) is configured to initiate a search procedure for a radio cell based on using the derived cell information.

15. The mobile device (500) of claim 13 or 14,
wherein the processor (503) is configured to derive the synchronization information based on sequence frame numbers SFNs of the sequence of radio frames.

## Patentansprüche

1. Verfahren (200) zum Ableiten von Zelleninformationen einer Funkzelle durch eine Mobilfunkvorrichtung, wobei das Verfahren umfasst:
Empfangen (201) einer Abfolge von Funkdatenblöcken, wobei jeder Funkdatenblock einen Masterinformationsblock, MIB, umfasst;
Ableiten (202) von Synchronisationsinformationen der Abfolge von Funkdatenblöcken aus den MIBs von mindestens zwei Funkdatenblöcken;
Ermitteln (203) aufgrund der Synchronisationsinformationen einer Position eines ersten Systeminformationsblocktyps, SIB1, der in der Abfolge von Funkdatenblöcken enthalten ist;
Ermitteln (204) aufgrund der Informationen, die in dem SIB1 enthalten sind, einer Position eines zweiten Systeminformationsblocktyps, SIB2, der in der Abfolge von Funkdatenblöcken enthalten ist; und
Ableiten (205) der Zelleninformationen aufgrund mindestens eines des SIB1 und des SIB2;
wobei das Empfangen (201) der Abfolge von Funkdatenblöcken ein Zwischenspeichern der Teildatenblöcke zwischen dem MIB und dem SIB1 umfasst;
**dadurch gekennzeichnet, dass**
nach einem erfolgreichen Decodieren von SIB1-Informationen, was ein Planen von Parametern von anderen Systeminformationsblöcken als dem SIB1 bereitstellt, ein Abrufen der anderen Systeminformationsblöcke aus den zwischengespeicherten Teildatenblöcken erfolgt, um zu prüfen, ob sie irgendwelche dynamisch geplante Systeminformationsblöcke aufweisen.

2. Verfahren (200) nach Anspruch 1, umfassend:
Ableiten von Synchronisationsinformationen aufgrund von Abfolgedatenblocknummern (Sequence Frame Numbers, SFNs) der Abfolge von Funkdatenblöcken.

3. Verfahren (200) nach Anspruch 2,
wobei jeder MIB ein SFN-Feld umfasst, in dem nur ein Anteil der höchstwertigen Bits (Most Significant Bits portion, MSB-Anteil) einer entsprechenden SFN aufgezeichnet wird.

4. Verfahren (200) nach Anspruch 3, umfassend:
Ableiten der Synchronisationsinformationen aufgrund einer Änderung in dem SFN-Feld des MIB.

5. Verfahren (200) nach Anspruch 4, umfassend:
Speichern der Abfolge der Funkdatenblöcke, bis die Änderung in dem SFN-Feld des MIB erkannt wird; und
Ermitteln der Position des SIB1 aufgrund der gespeicherten Funkdatenblöcke.

6. Verfahren (200) nach einem der Ansprüche 2 bis 5,
wobei ein Anteil der niedrigstwertigen Bits (Least Significant Bits portion, LSB-Anteil) einer entsprechenden SFN eine redundante Version des MIB anzeigt.

7. Verfahren (200) nach einem der Ansprüche 2 bis 6,
Ermitteln der SFNs aufgrund des Empfangens von höchstens vier aufeinanderfolgenden Funkdatenblöcken.

8. Verfahren (200) nach einem der vorhergehenden Ansprüche, umfassend:
Decodieren des SIB1, um die Position des SIB2 zu erhalten; und
Decodieren des SIB2, um die Zelleninformationen zu erhalten.

9. Verfahren (200) nach einem der vorhergehenden Ansprüche, umfassend:
Verwenden der Zelleninformationen, um eine Anzahl von Suchfrequenzen aus einem Funkzellensuchprozess auszuschließen oder um die Mobilfunkvorrichtung auf die Funkzelle auszurichten.

10. Verfahren (200) nach einem der vorhergehenden Ansprüche, umfassend:
Ermitteln aufgrund der Informationen, die in dem SIB1 enthalten sind, einer Position von weiteren Systeminformationsblocktypen SIB3, SIB4, SIB5, SIB6, SIB7, SIB8, die in der Abfolge von Funkdatenblöcken enthalten sind; und
Ableiten weiterer Zelleninformationen aufgrund der weiteren Systeminformationsblocktypen.

11. Verfahren (200) nach einem der vorhergehenden Ansprüche,
wobei der SIB1 gemäß einem festen Plan in der Abfolge von Funkdatenblöcken angeordnet ist; und
wobei der SIB2 gemäß einem durch den SIB1 ermittelten Plan in der Abfolge von Funkdatenblöcken angeordnet ist.

12. Computerlesbares nichtflüchtiges Medium, in dem Computerbefehle gespeichert sind, die, wenn sie von einem Computer ausgeführt werden, den Computer veranlassen, das Verfahren nach einem der Ansprüche 1 bis 11 auszuführen.

13. Mobilfunkvorrichtung (500), umfassend:
einen Empfänger (501), der konfiguriert ist zum Empfangen einer Abfolge von Funkdatenblöcken, wobei jeder Funkdatenblock einen Masterinformationsblock, MIB, umfasst; und
einen Prozessor (503), der konfiguriert ist zum:
Ableiten von Synchronisationsinformationen der Abfolge von Funkdatenblöcken aus den MIBs von mindestens zwei Funkdatenblöcken;
Ermitteln aufgrund der Synchronisationsinformationen einer Position eines ersten Systeminformationsblocktyps, SIB1, der in der Abfolge von Funkdatenblöcken enthalten ist;
Ermitteln aufgrund der Informationen, die in dem SIB1 enthalten sind, einer Position eines zweiten Systeminformationsblocktyps, SIB2, der in der Abfolge von Funkdatenblöcken enthalten ist; und
Ableiten von Zelleninformationen aufgrund mindestens eines des SIB1 und des SIB2;
wobei das Empfangen der Abfolge von Funkdatenblöcken ein Zwischenspeichern der Teildatenblöcke zwischen dem MIB und dem SIB1 umfasst;
**dadurch gekennzeichnet, dass**:
der Prozessor (503) außerdem konfiguriert ist, um nach einem erfolgreichen Decodieren von SIB1-Informationen, was ein Planen von Parametern von anderen Systeminformationsblöcken als dem SIB1 bereitstellt, die anderen Systeminformationsblöcke aus den zwischengespeicherten Teildatenblöcken abzurufen, um zu prüfen, ob sie irgendwelche dynamisch geplante Systeminformationsblöcke aufweisen.

14. Mobilfunkvorrichtung (500) nach Anspruch 13,
wobei der Prozessor (503) konfiguriert ist zum Starten eines Suchprozesses nach einer Funkzelle aufgrund des Verwendens der abgeleiteten Zelleninformationen.

15. Mobilfunkvorrichtung (500) nach Anspruch 13 oder 14,
wobei der Prozessor (503) konfiguriert ist zum Ableiten der Synchronisationsinformationen aufgrund von Abfolgedatenblocknummern (Sequence Frame Numbers, SFNs) der Abfolge von Funkdatenblöcken.

## Revendications

1. Procédé (200) d'obtention d'une information de cellule d'une cellule radio par un dispositif mobile, le procédé consistant à :
recevoir (201) une séquence de trames radio, chaque trame radio comprenant un bloc d'informations maître (MIB) ;
obtenir (202) une information de synchronisation de la séquence de trames radio à partir des MIB d'au moins deux trames radio ;
déterminer (203) une position d'un bloc d'informations de système d'un premier type (SIB1) compris dans la séquence de trames radio sur la base de l'information de synchronisation ;
déterminer (204) une position d'un bloc d'informations de système d'un second type (SIB2) compris dans la séquence de trames radio sur la base d'une information comprise dans le SIB1 ; et
obtenir (205) l'information de cellule sur la base du SIB1 et/ou du SIB2 ;
la réception (201) de la séquence de trames radio consistant à mettre en mémoire cache les sous-trames entre le MIB et le SIB1 ;
le procédé étant **caractérisé par** l'étape consistant à :
après le décodage satisfaisant d'une information du SIB1 qui fournit des paramètres de planification d'autres blocs d'informations de système différents du SIB1, extraire les autres blocs d'informations de système des sous-trames mises en mémoire cache pour vérifier s'ils comportent de quelconques blocs d'informations de système planifiés dynamiques.

2. Procédé (200) selon la revendication 1, consistant à :
obtenir l'information de synchronisation sur la base de numéros de trame de séquence (SFN) de la séquence de trames radio.

3. Procédé (200) selon la revendication 2,
chaque MIB comprenant un champ SFN enregistrant uniquement une partie de bits de poids fort (MSB) d'un SFN respectif.

4. Procédé (200) selon la revendication 3, consistant à :
obtenir l'information de synchronisation sur la base d'une modification dans le champ SFN du MIB.

5. Procédé (200) selon la revendication 4, consistant à :
stocker la séquence de trames radio jusqu'à la détection de la modification dans le champ SFN du MIB ; et
déterminer la position du SIB1 sur la base des trames radio stockées.

6. Procédé (200) selon l'une des revendications 2 à 5,
dans lequel une partie de bits de poids faible (LSB) d'un SFN respectif indique une version redondante du MIB.

7. Procédé (200) selon l'une quelconque des revendications 2 à 6, consistant à :
déterminer les SFN sur la base de la réception, au plus, de quatre trames radio successives.

8. Procédé (200) selon l'une quelconque des revendications précédentes, consistant à :
décoder le SIB1 pour obtenir la position du SIB2 ; et
décoder le SIB2 pour obtenir l'information de cellule.

9. Procédé (200) selon l'une quelconque des revendications précédentes, consistant à :
utiliser l'information de cellule pour exclure un nombre de fréquences de recherche d'une procédure de recherche de cellules radio ou pour diriger le dispositif mobile vers la cellule radio.

10. Procédé (200) selon l'une quelconque des revendications précédentes, consistant à :
déterminer une position de blocs d'informations de système d'autres types (SIB3, SIB4, SIB5, SIB6, SIB7, SIB8) compris dans la séquence de trames radio sur la base de l'information comprise dans le SIB1 ; et
obtenir une autre information de cellule sur la base des blocs d'informations de système d'autres types.

11. Procédé (200) selon l'une quelconque des revendications précédentes,
dans lequel le SIB1 est agencé dans la séquence de trames radio selon une planification fixe ; et
dans lequel le SIB2 est agencé dans la séquence de trames radio selon une planification déterminée par le SIB1.

12. Support non temporaire et lisible par ordinateur sur lequel sont stockées des instructions informatiques qui, lorsqu'elles sont exécutées par un ordinateur, amènent l'ordinateur à réaliser le procédé selon l'une quelconque des revendications 1 à 11.

13. Dispositif mobile (500), comprenant :
un récepteur (501), configuré pour recevoir une séquence de trames radio, chaque trame radio comprenant un bloc d'informations maître (MIB) ; et
un processeur (503), configuré pour :
obtenir une information de synchronisation de la séquence de trames radio à partir des MIB d'au moins deux trames radio ;
déterminer une position d'un bloc d'informations de système d'un premier type (SIB1) compris dans la séquence de trames radio sur la base de l'information de synchronisation ;
déterminer une position d'un bloc d'informations de système d'un second type (SIB2) compris dans la séquence de trames radio sur la base d'une information comprise dans le SIB1 ; et
obtenir une information de cellule sur la base du SIB1 et/ou du SIB2 ;
la réception de la séquence de trames radio consistant à mettre en mémoire cache les sous-trames entre le MIB et le SIB1 ;
le dispositif mobile étant **caractérisé en ce que** :
le processeur (503) est en outre configuré, après le décodage satisfaisant d'une information du SIB1 qui fournit des paramètres de planification d'autres blocs d'informations de système différents du SIB1, pour extraire les autres blocs d'informations de système des sous-trames mises en mémoire cache pour vérifier s'ils comportent de quelconques blocs d'informations de système planifiés dynamiques.

14. Dispositif mobile (500) selon la revendication 13,
dans lequel le processeur (503) est configuré pour amorcer une procédure de recherche d'une cellule radio sur la base de l'utilisation de l'information de cellule obtenue.

15. Dispositif mobile (500) selon la revendication 13 ou 14,
dans lequel le processeur (503) est configuré pour obtenir l'information de synchronisation sur la base de numéros de trame de séquence (SFN) de la séquence de trames radio.
